# EUROPÄISCHE PATENTSCHRIFT

(11) **EP 1 886 851 B1**
(45) Veröffentlichungstag und Bekanntmachung des Hinweises auf die Patenterteilung: **25.05.2011**
(21) Anmeldenummer: 07012735.2
(22) Anmeldetag: 28.06.2007
(51) Int. Cl.: B60H 1/00

(54) **Wandheizer**
Wall heater
Chauffage mural

(30) Priorität: 11.08.2006 DE 102006037755
(43) Veröffentlichungstag der Anmeldung: 13.02.2008
(73) Patentinhaber: AURORA Konrad G. Schulz GmbH & Co. KG, 69427 Mudau (DE)
(72) Erfinder: Reuff, Andreas, 74172 Neckarsulm (DE)
(74) Vertreter: Baronetzky, Klaus

(56) Entgegenhaltungen:
- DE-A1- 3 333 064
- DE-A1- 19 645 545
- GB-A- 2 155 171

## Beschreibung

Die Erfindung betrifft einen Wandheizer, gemäß dem Oberbegriff von Anspruch 1.

Ein derartiger Wandheizer ist beispielsweise aus der DE 100 30 867 A1 bekannt. Ein derartiger Seitenwandheizer fußt auf der Konstruktion gemäß der DE-OS-35 01 451, bei welcher über ein Doppelradialgebläse eine vergleichsweise effektive Beheizung beispielsweise eines Omnibusses möglich ist.

Gegenüber älteren Konstruktionen haben derartige Seitenwandheizer den Vorteil, dass die Montägeelemente nicht über die gesamte Länge der Seitenwand des Busses geführt werden müssen, sondern dass über das in Längsrichtung der Seitenwand ausgerichtete Gebläse eine gewisse Wurfweite erzielt wird, die es ermöglicht, dass mit wenigen Einheiten pro Bus ausgekommen werden kann.

Die Lösung gemäß der DE 100 30 867 erlaubt insofern eine vergleichsweise große Wurfweite, wobei ein Doppelradialgebläse mit einer entsprechend hohen Leistung eingesetzt wird. Jedoch ist diese Konstruktion vergleichsweise laut und zudem vergleichsweise teuer zu fertigen, zumal für unterschiedliche Größen auch unterschiedliche Kunststoffformteile erforderlich wären.

Die DE 196 45 545 A1 beschreibt einen Wandheizer mit einem nach oben geschlossenen Gehäuse, bei dem die Ansaugöffnung in einer vertikal verlaufenden Vorderwand und die Austrittsöffnungen an mindestens einer Unterwand angeordnet sind. Die Verteilung der klimatisierten Luft soll dabei über Umlenkbleche erfolgen.

Bei Konvektoren als Seitenwandheizern ist es andererseits an sich bekannt, über Strangpressprofile einen modularen Aufbau zu gewährleisten. Hierzu sei auf die DE 199 43 380 C1 verwiesen. Diese Konstruktion erlaubt es zwar, über eine beliebige Seitenwandlänge eine Anpassung des Seitenwandheizers vorzunehmen. Nachdem jedoch die gesamte Seitenwand von dem Seitenwandheizer eingenommen wird, bestehen häufig Platzprobleme, und insbesondere wird auch das Gewicht des Fahrzeugs deutlich erhöht.

Daher liegt der Erfindung die Aufgabe zugrunde, einen Wandheizer gemäß dem Oberbegriff von Anspruch 1 zu schaffen, der vergleichsweise günstig zu fertigen ist und auch für unterschiedlichen Größen von zu beheizenden Räumen, insbesondere Großraumfahrzeugen, einsetzbar ist.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, wenn sich druckseitig des Gebläses eine Art Pufferraum aufbauen kann, der der Strömungsvergleichmäßgigung dient und überraschend im Vergleich mit der Lösung gemäß der DE-OS 100 30 867 eine deutlich verbesserte Gebläseleistung bei gleicher schon teilweise Motorleistung aufweist. Dieser Pufferraum dient praktisch der Strömungsumlenkung und erstreckt sich schräg unterhalb des Gebläses an dessen Druckstutzen entlang. Das Gebläse ist auf einer schrägen Trennwand zwischen Druckraum und Saugraum montiert. Diese Trennwand bietet zugleich eine Wand des Umlenkbereiches oder Pufferraums, der vom Querschnitt her wie ein Dreieck ausgebildet sein kann, oder wie eine Mischform zwischen Kreisabschnitt und Dreieck. Offenbar ist es günstig, dass ein vergleichsweise großer Strömungsweg bis zur gegenüberliegenden Wand, auf den Druckstutzen bezogen, vorliegt, wobei es unschädlich ist, dass sich dieser Strömungsweg zu dem oberen und unteren Endbereichen des Dreiecks hin auf Null reduziert.

Die Schrägstellung erlaubt eine besonders günstige Raumausnutzung und erfordert keine Erhöhung der Bautiefe oder Baubreite des Wandheizers, so dass mit überraschend einfachen Mitteln eine verbesserte Ausnutzung des vorgegebenen Innenraums des Wandheizers realisierbar ist.

Die erfindungsgemäße Lösung erlaubt es zudem, die Anordnung des Wärmetauschers an einen strömungstechnisch günstigen Ort zu realisieren. Der Wärmetauscher kann als großflächiger Wärmetauscher oberhalb der schrägen Gebläseanordnung realisiert sein. Dies ermöglicht eine vergleichsweise geringe Strömungsgeschwindigkeit und damit einen guten Wärmetauscherwirkungsgrad, im Vergleich mit einer Lösung, bei der ein kompakter Wärmetauscher von der komprimierten Druckluft des Gebläses durchblasen wird.

Zudem ist bei einem derartigen großflächigen Wärmetauscher die Realisierung der Wasseranschlüsse vereinfacht, denn pro Wandheizer muss lediglich ein Leitungspaar bereitgestellt werden, das auch ohne weiteres unmittelbar nach unten geführt werden kann, so dass die Versorgung mit Kühlwasser beispielsweise des Omnibus vereinfacht ist.

In weiterer vorteilhafter Ausgestaltung der Erfindung ist es vorgesehen, für das Gehäuses des Wandheizers ein Strangpressprofil zu verwenden. Das Strangpressprofil weist Befestigungsnuten auf, die passend beispielsweise zur Trennwand und damit zur Montagewand für das Gebläse ausgebildet sein können.

Hierdurch ergibt sich eine stabile Lagermöglichkeit mit zusätzlicher Aussteifung des Gehäuses durch die schrägstehende Trennwand, die zugleich zur preisgünstigen Fertigung führt. Verschiedene Leistungsstufen der Gebläse und damit des Seitenwandheizers können recht einfach produziert werden, indem das Strangpressprofil, das zur Bildung des Gehäuses eingesetzt wird, in der erwünschten Länge abgeschnitten wird.

Bei größeren Gebläseleistungen ist sowohl der Motor als auch das Gebläsegehäuse länger, und in vorteilhafter Ausgestaltung können dann kurzerhand die den Umlenkbereich und die Strömungsaufweitung bildenden beiden Kunststoff-Formteile weiter auseinander gerückt montiert werden, um Platz beispielsweise für den größeren Motor des Gebläses zu bieten. Bei Bedarf kann dann auch ein längerer Wärmetauscher eingebaut werden, und es muss lediglich zusätzlich das obenliegende Lochblech, das den Wärmetauscher abdeckt, länger abgeschnitten werden.

Während erfindungsgemäß bevorzugt der Einbauort des Wandheizers eine Seitenwand eines Busses ist, versteht es sich, dass auch grundsätzlich die Montage beispielsweise an einer Frontwand oder Rückwand eines anderen Großraumfahrzeugs in Betracht kommt. Beispielsweise ist auch die Wand eines Triebwagens oder sonstigen Schienenfahrzeugs als Einbauort gut geeignet und durch die große Wurfweite bei vergleichsweise geringer Gebläseleistung lässt sich auch mit wenigen erfindungsgemäßen Wandheizern eine intensive Beheizung auch eines Großraumfahrzeugs realisieren.

Weitere Vorteile, Einzelheiten und Merkmale ergeben sich aus der nachfolgenden Beschreibung zweier Ausführungsbeispiele der Erfindung anhand der Zeichnung.

Es zeigen:
- Fig. 1: eine schematische, teilweise aufgebrochene perspektivische Ansicht einer Ausführungsform eines erfindungsgemäßen Wandheizers;
- Fig. 2: ein Schnitt durch den Wandheizer gemäß Fig. 1; und
- Fig. 3: ein Schnitt durch eine weitere Ausführungsform eines Wandheizers, in einer Darstellung gemäß Fig. 2.

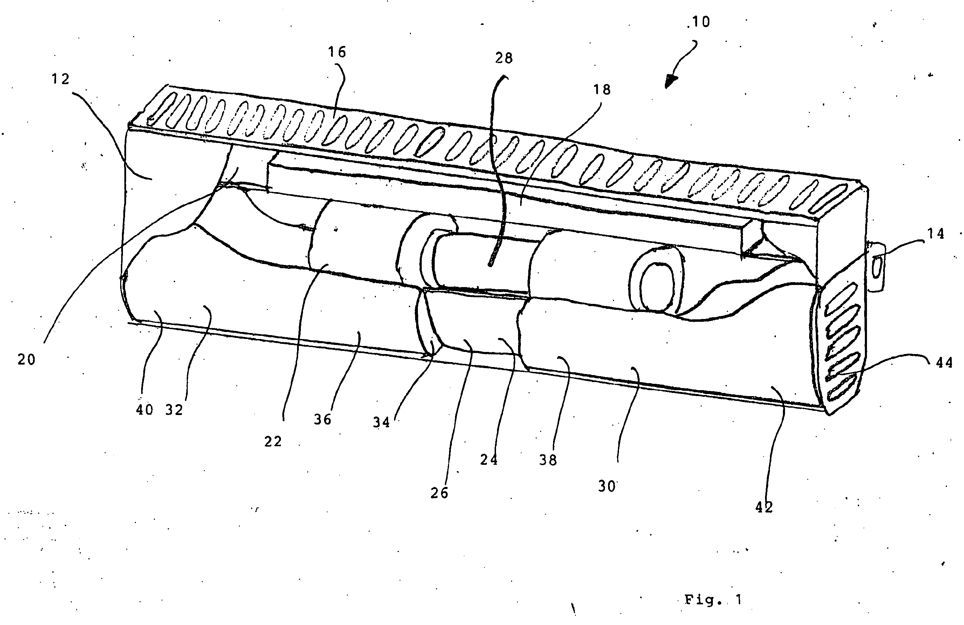

Der in Fig. 1 dargestellte Wandheizer 10 weist ein Gehäuse 12 auf, das sich - wie es bei Wandheizern üblich ist - in länglicher Form horizontal an einer Montagewand, bevorzugt an einer Seitenwand eines Omnibusses, entlang erstreckt.

Für die Befestigung des Wandheizers 10 an der Montagewand sind geeignete Befestigungsmittel, im dargestellten Ausführungsbeispiel ein Befestigungsflansch 14, vorgesehen.

Das Gehäuse 12 ist nach oben offen und dort über ein Luftgitter 16 über seine gesamte Länge abgedeckt. Unterhalb des Luftgitters 16 erstreckt sich großflächig ein Wärmetauscher 18, der auf einer horizontalen Trennwand 20 montiert ist, die den Luftdurchtritt seitlich des Wärmetauschers verhindert.

Zentral in dem Wandheizers 10 unterhalb des Wärmetauschers 18 ist ein Gebläse, im Beispielsfall ein Doppelradialgebläse 22, montiert, und zwar erfindungsgemäß in besonderer Weise.

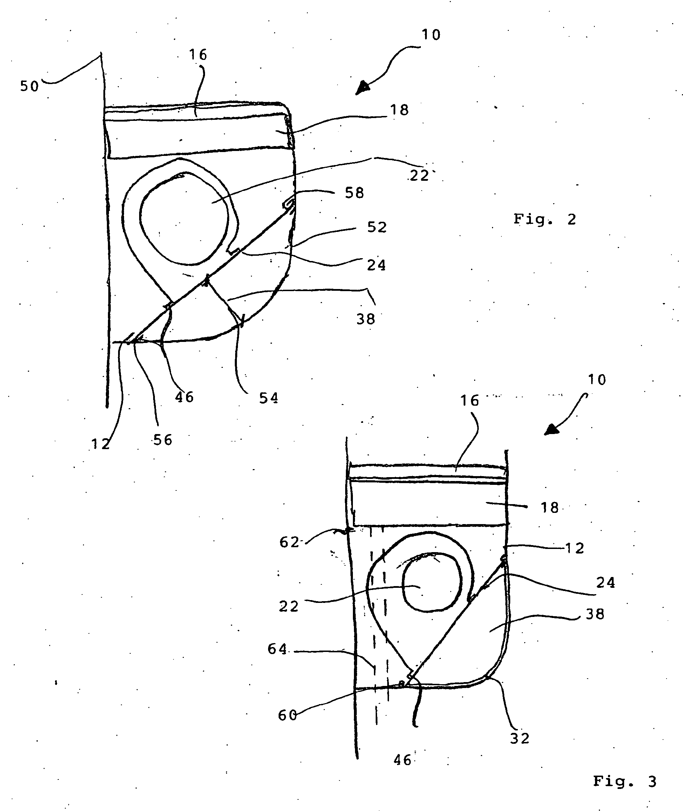

Das Doppelradialgebläse 22 ist auf einer schrägstehenden Trennwand 24 montiert, die einstückig oder mehrstückig ausgebildet sein kann. In dem dargestellten Ausführungsbeispiel ist die Trennwand 24 dreistückig ausgebildet, wobei sich ein Mittelstück 26 im Bereich des Elektromotors 28 der Doppelradialgebläses 22 erstreckt, während die Seitenteile, die besser aus Fig. 2 und 3 ersichtlich sind, Teil von Kunststoff-Formteilen 30 und 32 sind, deren Funktion im weiteren erläutert wird.

Die Kunststoff-Formteile 30 und 32 sind zum Mittelstück 26 hin an ihren Stirnflächen 34 geschlossen. An die Stirnfläche schließt sich je ein Umlenkbereich 36 und 38 an, an den sich wiederum ein Strömungsaufweitungsbereich 40 und 42 anschließt. Der Strömungsaufweitungsbereich 40 und 42 ist je mit einem Abdeckgitter abgeschlossen, wobei das Abdeckgitter 44 aus Fig. 1 ersichtlich ist.

Außen sind die Formteile 30 und 32 an die Innenform des Gehäuses 12 angepasst und insofern formschlüssig mit diesem verbunden. Sie erstrecken sich nach oben bis zur Trennwand 20, so dass auch insofern eine Abstützung gegeben ist. Die Trennwand 24 bietet je zugleich für jedes Formteil 30 und 32 den Montageort für den Druckflansch 46 des Gebläses, wobei die Trennwand 24 schräg stehend ausgebildet ist, und praktisch die untere/vordere Ecke des Gehäuses 12 abschneidet. Hierdurch wird der zur Verfügung stehende Freiraum für die Realisierung des Umlenkbereichs ausgenutzt, der dann zu dem Strömungsauslass hin in den Strömungsaufweitungsbereich 42 übergeht.

Aus Fig. 2 ist ersichtlich, in welcher Weise der Wandheizer 10 an einer Montagewand 50 angebracht sein kann. Hier wie auch in den weiteren Figuren weisen gleiche Bezugszeichen auf gleiche Teile hin. Das Gehäuse 12 ist in der Ausführungsform gemäß Fig. 2 an der unteren/vorderen Ecke mit einem Radius 52 abgerundet, so dass eine für die Passagiere des Großraumfahrzeugs fußfreundliche Ausgestaltung vorliegt.

Schräg oberhalb des Radius 52 erstreckt sich die Trennwand 24, die gleichzeitig Montageort für das Doppelradialgebläse 22 ist, so dass dessen Druckstutzen an der Trennwand 24 verschraubt oder in anderer Weise angebracht ist.

Dementsprechend steht für die Realisierung der Umlenkung dort eine vergleichsweise große Strömungstiefe 54 zur Verfügung, denn die Tiefe des Umlenkbereichs - betrachtet senkrecht zur Trennwand 24 - ist an der Stelle des Strömungsmaximums des Doppelradialgebläses 22 maximal.

Es versteht sich, dass das Doppelradialgebläse 22 in beliebiger geeigneter Weise montiert sein kann. Bevorzugt ist es gegenüber der Mitte des Gehäuses 12 etwas zur Montagewand 50 hin versetzt, so dass mehr Platz für die Realisierung des Umlenkbereichs 38 zur Verfügung steht.

In dem Ausführungsbeispiel gemäß Fig. 2 ist die Montagewand als Aluminiumblech realisiert, das aber bei Bedarf auch durch eine Kunststoffplatte oder dergleichen ersetzt sein kann.

Die Trennwand 24 ist in Nuten 56 und 58 des Strangpressprofils aufgenommen, das das Gehäuse 12 bildet. Bei Bedarf kann seitlich der Ausströmöffnung des Gebläses 22 auch eine Aussteifung über Rippen oder dergleichen realisiert sein.

Demgegenüber ist bei der Ausführungsform gemäß Fig. 3 die Trennwand 24 als Teil des Formteils 32 realisiert. Das Formteil 32 lehnt sich dort und auch im übrigen innen an das Gehäuse 12 an, wobei bei Bedarf durch Rippen, von denen eine Rippe 60 aus Fig. 3 ersichtlich ist, zusätzlich die Lagerung am Gehäuse 22 im belasteten Bereich der Trennwand 24 verbessert werden kann.

Das Formteil 32 kann mit bereits vormontiertem Doppelradialgebläse entweder aus axialer Richtung des Gehäuses 12 eingeführt werden, oder kurzerhand durch Eindrücken von oben unter Überwindung der Haltekraft der Rippen eingeschnappt werden.

In ähnlicher Weise kann die Befestigung und Lagerung des Wärmetauschers 18 über an sich bekannte Rippen des Strangpressprofils erfolgen, wobei eine Rippe 62 aus Fig. 3 ersichtlich ist.

Während bevorzugt das Strangpressprofil für das Gehäuse 12 im Wesentlichen U-förmig ausgebildet ist, versteht es sich, dass anstelle dessen auch möglich ist, bei Bedarf mit einem im Wesentlichen L-förmigen Gehäuse auszukommen und die Montagewand 20 als seitliches Abschlusselement zu realisieren. Die Montagewand 50 muss dann allerdings mit den entsprechenden zusätzlich erforderlichen Befestigungselementen verstehen sein, um beispielsweise das Luftgitter 16 und den Wärmetauscher 18 seitlich abzustützen.

Die Wasserversorgung des Wärmetauschers 18 kann bevorzugt über in Fig. 3 gestrichelt angedeutete Anschlussrohre 64 erfolgen, die hinter dem Gebläsegehäuse des Doppelradialgebläses 22 nach unten geführt sind.

## Patentansprüche

1. Wandheizer, insbesondere für Großraumfahrzeuge wie Omnibusse, mit einem Wärmetauschen (18) einem Gebläse (22), insbesondere einem Doppelradialgebläse, wobei ein Druckstutzen des Gebläses (22), dessen Druckluft in einem Umlenkbereich (36, 38) in eine Richtung parallel zur Längserstreckung des Wandheizers (10) umgelenkt wird, an einer Trennwand für den Umlenkbereich (36, 38) angeflanscht ist, wobei der Druckstutzen des Gebläses (22) schräg zur Montagewand (50) des Wandheizers (10) angebracht ist, **dadurch gekennzeichnet, dass** der Umlenkbereich (36, 38) sich innerhalb eines Kunststoff-Formteils (30, 32) über Eck erstreckt.

2. Wandheizer nach Anspruch 1, **dadurch gekennzeichnet, dass** der Wärmetauscher (18) des Wandheizers (10) stromauf, insbesondere oberhalb des Gebläses (22) montiert ist.

3. Wandheizer nach einem der vorhergehenden Ansprüche, **dadurch gekennzeichnet, dass** der Druckflansch des Gebläses (22), insbesondere des Radialgebläses (22), einen Schrägstellungswinkel von 30° bis 60°, bevorzugt etwa 45° zur Montagewand (50), insbesondere der Seitenwand, des Wandheizers (10) aufweist.

4. Wandheizer nach einem der vorhergehenden Ansprüche, **dadurch gekennzeichnet, dass** sich an dem Umlenkbereich (36, 38) ein Strömungsaufweitungsbereich (40, 42) anschließt, der eine im Wesentlichen S-förmig geschwungene Wand aufweist, die der Strömungsaufweitung von dem Umlenkbereich (36, 38) zu einer Ausströmöffnung dient.

5. Wandheizer nach einem der vorhergehenden Ansprüche, **dadurch gekennzeichnet, dass** das Gebläse (22) als Doppelradialgebläse ausgebildet ist, und jedes Radialgebläse (22) einen eigenen Umlenkbereich (36, 38) aufweist, wobei die Umlenkbereiche strömungstechnisch voneinander getrennt sind.

6. Wandheizer nach einem der vorhergehenden Ansprüche, **dadurch gekennzeichnet, dass** das Gebläse (22) als Doppelradialgebläse ausgebildet ist, und der Wärmetauscher (18) flach liegend über beiden Radialgebläsen des Doppelradialgebläses (22) angeordnet ist und von beiden Radialgebläsen gemeinsam durchströmbar ist.

7. Wandheizer nach einem der vorhergehenden Ansprüche, **dadurch gekennzeichnet, dass** ein Paar von Wasseranschlussstutzen für den Wärmetauscher (18) vorgesehen ist, die sich besonders unmittelbar dem Gebläse (22) benachbart nach unten aus dem Wandheizer (10) herauserstrecken.

8. Wandheizer nach einem der vorhergehenden Ansprüche, **dadurch gekennzeichnet, dass** der Wandheizer (10) an seiner Oberseite ein Gitter, Rost oder Sieb (16) aufweist, das eine Ansaugöffnung für den Wandheizer (10) bildet, und dass Auslassöffnungen (44) des Wandheizers (10) an seinen Stirnseiten ausgebildet sind.

9. Wandheizer nach einem der vorhergehenden Ansprüche, **dadurch gekennzeichnet, dass** der Wandheizer (10) ein Gehäuse (12) aufweist, das insbesondere in Strangpressprofil ausgebildet ist.

10. Wandheizer nach einem der vorhergehenden Ansprüche 4-9, **dadurch gekennzeichnet, dass** der Umlenkbereich (36, 38) und der Strömungsaufweitungsbereichungs (40, 42) durch das Kunststoff-Formteil (30, 32) gebildet sind, das in das Gehäuse (12) des Wandheizers (10) eingesetzt ist und gegen dieses abdichtet.

11. Wandheizer nach Anspruch 10, **dadurch gekennzeichnet, dass** der Umlenkbereich (36, 38) und der Strömungsaufweitungsbereich durch separate Kunststoff-Formteile (30, 32) gebildet sind, die unabhängig vom Gehäuse (12) geschlossen sind.

12. Wandheizer nach einem der vorhergehenden Ansprüche, **dadurch gekennzeichnet, dass** der Querschnitt des Wärmetauschers (18), der insbesondere im Saugbereich des Wandheizers (10) ausgebildet ist, ein Vielfaches, insbesondere mehr als das Dreifache und bis zum Zehnfachen, des Strömungsquerschnitts im Druckbereich beträgt.

## Claims

1. A wall heating device, in particular for large-capacity vehicles such as buses, said wall heating device comprising a heat exchanger (18), a fan (22), in particular a dual radial-blow fan, wherein a pressure socket of the fan (22) whose compressed air is deflected in a deflection area (36, 38) in a direction parallel to the longitudinal extension of the wall heating device (10), is flange-mounted at a dividing wall for the deflection area (36, 38), said pressure socket of the fan (22) being mounted at an angle to the mounting or dividing wall (50) of the wall heating device (10), **characterized in that** the deflection area (36, 38) extends within a plastic moulded part (30, 32) across or around the corner.

2. The wall heating device as claimed in claim 1, **characterized in that** the heat exchanger (18) of the wall heating device (10) is mounted upstream, in particular above the fan or blower (22).

3. The wall heating device as claimed in one of the preceding claims, **characterized in that** the pressure flange of the fan or blower (22), in particular of the radial-blow fan (22), comprises an angle of skew of 30° to 60°, preferably approximately 45° relative to the mounting or dividing wall (50), in particular to the side wall of the wall heating device (10).

4. The wall heating device as claimed in one of the preceding claims, **characterized in that** a flow expansion area (40, 42) follows the deflection area (36, 38), said flow expansion area comprising a substantially S-shaped curved wall that serves to expand the flow from the deflection area (36, 38) to an outflow opening.

5. The wall heating device as claimed in one of the preceding claims, **characterized in that** the fan or blower (22) is configured as a dual radial-blow fan, and each radial fan or blower (22) comprises an own deflection area (36, 38), wherein the deflection areas are fluidically separated from one another.

6. The wall heating device as claimed in one of the preceding claims, **characterized in that** the fan or blower (22) is configured as a dual radial-blow fan, and that the heat exchanger (18) is arranged above both radial fans or blowers of the dual radial-blow fan (22) in a flat-lying manner and can be flowed through by both radial fans or blowers together.

7. The wall heating device as claimed in one of the preceding claims, **characterized in that** a pair of water confection sockets for the heat exchanger (18) is provided that in particular directly adjacent to the fan or blower (22) downwardly extends out through the wall heating device (10).

8. The wall heating device as claimed in one of the preceding claims, **characterized in that** the wall heating device (10) on the upper side thereof comprises a grid, grate or screen (16) that forms a suction opening for the wall heating device (10), and that outlet openings (44) of the wall heating device (10) are formed at the front ends thereof.

9. The wall heating device as claimed in one of the preceding claims, **characterized in that** the wall heating device (10) comprises a housing (12) that in particular is formed as an extruded profile.

10. The wall heating device as claimed in one of the preceding claims 4 to 9, **characterized in that** the deflection area (36, 38) and the flow expansion area (40, 42) are formed by the plastic moulded part (30, 32) that is inserted into the housing (12) of the wall heating device (10) and that is sealed against the housing.

11. The wall heating device as claimed in claim 10, **characterized in that** the deflection area (36, 38) and the flow expansion area are formed by separate plastic moulded parts (30, 32) that are closed independently of the housing (12).

12. The wall heating device as claimed in one of the preceding claims, **characterized in that** the cross-section of the heat exchanger (18) that in particular is formed in the suction area of the wall heating device (10), amounts to several times, in particular to more than three times and up to ten times the flow cross-section in the pressure range.

## Revendications

1. Chauffage mural, notamment pour les gros véhicules comme les autobus, avec un échangeur de chaleur (18) et un ventilateur (22), notamment un ventilateur radial double, où un raccord de tuyau sous pression du ventilateur (22), dont l'air comprimé est dévié dans une zone de déviation (36, 38) dans une direction parallèle à l'extension longitudinale du chauffage mural (10), est bridé à une partition pour la zone de déviation (36,38), où le raccord de tuyau du ventilateur (22) est fixé en diagonale par rapport à la paroi de montage (50) du chauffage mural (10), **caractérisé en ce que** la zone de déviation (36, 38) s'étend en diagonale à l'intérieur d'une pièce en plastique moulé (30, 32).

2. Chauffage mural selon la revendication 1, **caractérisé en ce que** l'échangeur de chaleur (18) du chauffage mural (10) est monté en amont, de préférence au-dessus du ventilateur (22).

3. Chauffage mural selon l'une des revendications précédentes, **caractérisé en ce que** la bride à pression du ventilateur (22), de préférence du ventilateur radial (22), présente un angle d'inclinaison de 30° à 60°, de préférence 45° par rapport à la paroi de montage, de préférence la paroi latérale du chauffage mural (10).

4. Chauffage mural selon l'une des revendications précédentes, **caractérisé en ce qu'**une zone d'expansion d'écoulement (40, 42), qui présente une paroi essentiellement en forme de S, se relie à la zone de déviation (36, 38) qui sert à l'expansion de débit de la zone de déviation (36, 38) en ouverture d'écoulement.

5. Chauffage mural selon l'une des revendications précédentes, **caractérisé en ce que** le ventilateur (22) est conçu comme un ventilateur radial double, et chaque ventilateur radial (22) présente sa propre zone de déviation (36, 38), où les zones de déviation sont séparés l'une de l'autre en ce qui concerne la technique de circulation.

6. Chauffage mural selon l'une des revendications précédentes, **caractérisé en ce que** le ventilateur (22) est conçu comme un ventilateur radial double et l'échangeur de chaleur (18) est disposé à plat sur les deux ventilateurs radiaux du ventilateur radial double (22) et peut être ventilé par les deux ventilateurs radiaux ensemble.

7. Chauffage mural selon l'une des revendications précédentes, **caractérisé en ce qu'**une paire de raccords d'eau pour l'échangeur de chaleur (18) est prévue, qui s'étendent vers le bas depuis le chauffage mural (10) notamment directement contigus au ventilateur (22).

8. Chauffage mural selon l'une des revendications précédentes, **caractérisé en ce que** le chauffage mural (70) présente une grille, un grillage ou un tamis (16) sur sa face supérieure qui forme un orifice d'aspiration pour le chauffage mural (10), et que des ouvertures de sortie (44) du chauffage mural (10) sont configurées sur sa face arrière.

9. Chauffage mural selon l'une des revendications précédentes, **caractérisé en ce que** le chauffage mural (10) présente un boitier (12), qui de préférence est formée en profil extrudé.

10. Chauffage mural selon l'une des revendications précédentes 4 à 9, **caractérisé en ce que** la zone de déviation (36,38) et la zone d'expansion de débit (40, 42) sont formés par le moulage en plastique (30, 32), qui est inséré dans le boitier (12) du chauffage mural (10) et est scellé contre celui-ci.

11. Chauffage mural selon la revendication 10, **caractérisé en ce que** la zone du déflecteur (36, 38) et la zone d'expansion de flux sont formés par des pièces en plastique moulées (30, 32) séparées qui sont fermées indépendamment du boitier (12).

12. Chauffage mural selon l'une des revendications précédentes, **caractérisé en ce que** la coupe transversale de l'échangeur de chaleur (18), qui est formée de préférence dans la zone d'aspiration du chauffage mural (10), est un multiple, de préférence plus de trois fois et jusqu'à dix fois, la coupe transversale d'écoulement dans la zone de pression.
